(19)

Europäisches
Patentamt

European
Patent Office

Office européen
des brevets

(11)     **EP 3 004 015 B1**

(12)     **EUROPEAN PATENT SPECIFICATION**

(45) Date of publication and mention
of the grant of the patent:
**23.08.2017  Bulletin 2017/34**

(21) Application number: **14730467.9**

(22) Date of filing: **28.05.2014**

(51) Int Cl.:
***C03C 17/36*** (2006.01)

(86) International application number:
**PCT/EP2014/061093**

(87) International publication number:
**WO 2014/191472 (04.12.2014 Gazette 2014/49)**

(54) **LOW-EMISSIVITY GLAZING**

VERGLASUNG MIT GERINGER EMISSIVITÄT

VITRAGE À FAIBLE ÉMISSIVITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2013  BE 201300384**

(43) Date of publication of application:
**13.04.2016  Bulletin 2016/15**

(73) Proprietor: **AGC Glass Europe**
**1348 Louvain-La-Neuve (BE)**

(72) Inventors:
- **BAUDOUIN, Anne-Christine**
  **B-1435 Corbais (BE)**
- **MAHIEU, Stijn**
  **B-9920 Lovendegem (BE)**
- **DEPAUW, Jean-Michel**
  **B-1083 Bruxelles (BE)**

- **PURWINS, Michael**
  **37170 Offensen (DE)**
- **MATHIEU, Eric**
  **F-57200 Sarreguemines (FR)**
- **WEIS, Hansjoerg**
  **37671 Hoexter (DE)**
- **MÖNNEKES, Jörg**
  **37671 Höxter (DE)**

(74) Representative: **Agustsson, Sveinn Otto**
**AGC Glass Europe S.A.**
**Rue Louis Blériot, 12**
**6041 Gosselies (BE)**

(56) References cited:
| | |
|---|---|
| EP-A1- 1 829 835 | WO-A1-2005/115940 |
| WO-A1-2009/115596 | WO-A1-2009/115599 |
| WO-A1-2012/110823 | WO-A2-2006/067102 |
| DE-A1-102005 039 707 | FR-A1- 2 892 409 |
| GB-A- 2 428 251 | US-A1- 2006 121 315 |

**Description**

The present invention relates to low-emissivity glazing systems, i.e. glazing systems that have the property of reflecting infrared radiation emitted, for example, by the interior of buildings, thus limiting heat losses. Such glazing systems can be incorporated into windows of buildings or used in the field of automotive glazing.

The demand for such glazing systems is often linked to that for the provision of a light transmission as high as possible. The two requirements of low emissivity and high transmission normally lead to opposing solutions in terms of structure. It is necessary to make compromises that are difficult to put in place.

The most usual practice is to provide systems of thin layers comprising one or more layers capable of reflecting infrared radiation. Systems of this type are generally composed of metal layers, in particular silver layers with a thickness of some nanometres. The layers must be sufficiently thin that the visible light transmission is not reduced too significantly. The thickness must also be sufficient to hinder the transmission of infrared rays, the thickness directly determining the fraction thereof that is effectively reflected.

The systems applied to the glazing units must at the same time meet other conditions. Firstly, it is necessary to protect the metal reflective layers from any chemical or mechanical attack they may be exposed to. The metal layers are usually deposited onto the glass substrate by means of vacuum deposition techniques such as magnetic field-assisted cathodic sputtering, more usually referred to as "magnetron sputtering". The layers obtained by these techniques give the advantage of providing a substantial uniformity of composition, thickness and surface condition. However, they are very fragile and must be protected by additional layers. Transparent dielectric layers of metal oxides and/or nitrides or also mixtures thereof are used in a completely traditional manner to provide the required resistance. The transparent dielectric layers are additionally necessary to increase the light transmission of the system and to adjust its colour by functioning as an optical resonator.

At the same time, the metal layers must also be protected from any possible diffusion from the substrate that would adversely modify the properties of the reflective metal layer. The nature of the dielectric layers located between the substrate and the metal layer is often the same as that of the layers located above this same metal layer. These are metal oxides and/or nitrides.

Traditionally, the sequence of layers is as follows:

glass / dielectric I / metal / dielectric II.

The dielectrics that are used the most are in particular $ZnO$, $TiO_2$, $SnO_2$, $Si_3N_4$,... These dielectric layers provide various optical properties and are also distinguished by their industrial production conditions.

As indicated above, the metal layers are those that determine the emissivity of the assembly. While different metals are specified in the technical literature, practically all the existing products use layers based on silver as reflective metal. Indeed, this represents the best compromise in terms of infrared reflection and transparency to rays in the visible wavelength ranges and of neutrality of colour in transmission and reflection.

The most usual structures further include a particular layer between the metal and the outer dielectric, and the function of this layer is to protect the metal in particular during deposition of the layer of this dielectric. Indeed, the formation of this dielectric is most frequently conducted in a so-called "reactive" manner. In these methods the dielectric (oxide or nitride) is formed at the very instant of deposition by metal vapour emitted by bombardment of a metal cathode reacting with the atmosphere at very reduced pressure, in which this deposition takes place, which for an oxide is an oxygen atmosphere or an atmosphere of a mixture of gases containing oxygen. In these conditions the deposited metal layer is in contact with this atmosphere and may deteriorate in particular as a result of the high reactivity of the plasma.

To protect against this deterioration, a so-called barrier or sacrificial layer is usually deposited directly onto the metal layer that reflects the infrared rays. This is a metal or partially oxidised layer of very small thickness, and its function is to react with the constituents of the atmosphere that could cause deterioration of the metal layer that reflects the infrared rays. The barrier layer is carefully selected both with respect to its nature and to its thickness. It is not itself intended to affect the reflection of infrared radiation, but to react with the atmosphere, in which dielectric deposition of the layers deposited after the deposition of the metal layer reflecting the infrared rays are conducted. To prevent it from significantly reducing the light transmission, it is important to ensure not only that the barrier layer is as thin as possible, but that it is also transformed almost completely into transparent dielectric during its deposition or the deposition operations prior to its own deposition.

Consequently, traditional systems have the following layer sequence:

glass / dielectric I / metal / barrier / dielectric II.

Where applicable, the use of ceramic targets instead of metallic targets prevents having to conduct a reactive deposition. In other words, the oxide deposition can be conducted in an essentially inert atmosphere (generally below 10% oxygen), thus preventing the risk of oxidation of the previously deposited silver layer. Should this occur, it is possible to form a stack of layers without a barrier layer on top of the silver.

These low-emissivity glazing systems are generally assembled as multiple glazing units such as double or triple glazing units or even as laminated glazing units, in which the glass sheet bearing the coating stack is combined with one or more other glass sheets with or without coating, with the low-emissivity multilayer stack being in contact with the internal space between the glass sheets in the case of multiple glazing units, or in contact with the interlayer adhesive of the laminated unit in the case of laminated glazing units.

In some cases an operation to mechanically reinforce the glazing, such as thermal toughening of the glass sheet or sheets, becomes necessary to improve the resistance to mechanical stresses. For particular applications, it may also become necessary to give the glass sheets a more or less complex curvature by means of a bending operation at high temperature. In the processes of production and shaping of glazing systems there are certain advantages for conducting these heat treatment operations on the already coated substrate instead of coating an already treated substrate. These operations are conducted at a relatively high temperature, which is the temperature at which the functional layer based on infrared reflective material, e.g. based on silver, tends to deteriorate and lose its optical properties and properties relating to infrared radiation. These heat treatments consist in particular of heating the glass sheet to a temperature higher than 560°C in air, e.g. between 560°C and 700°C, and in particular around 640°C to 670°C, for a period of about 3, 4, 6, 8, 10, 12 or even 15 minutes, depending on the type of treatment and the thickness of the sheet. In the case of a bending treatment, the glass sheet can then be bent to the desired shape. The toughening treatment then consists of abruptly cooling the surface of the flat or bent glass sheet by air jets or cooling fluid to obtain a mechanical reinforcement of the sheet.

Therefore, in the case where the coated glass sheet must undergo a heat treatment, quite specific precautions must be taken to form a coating structure that is able to withstand a thermal toughening and/or bending treatment, sometimes referred to hereafter by the term "temperable", without losing the optical and/or energy properties it has been created for. In particular, the dielectric materials used to form the dielectric coatings must withstand the high temperatures of the heat treatment without exhibiting any adverse structural modification. Examples of materials particularly suitable for this use are zinc-tin mixed oxide, silicon nitride and aluminium nitride. It is also necessary to ensure that the functional layers, e.g. silver-based layers, are not oxidised during the course of the treatment, e.g. by assuring that at the instant of treatment there are barrier layers that are capable of either oxidising in place of the silver by trapping free oxygen or blocking the free oxygen migrating towards the silver during the heat treatment.

In addition, the formation of these layer assemblies must also result in satisfactory colours both in reflection and transmission with demand tending towards the most complete neutrality possible. The difficulty is to combine the colorimetric requirements with those associated with "base" conditions: high light transmission, very low emissivity, ability to withstand heat treatment, all at the same time.

Another requirement that must be increasingly taken into account results from the fact that products that have not been heat treated and others that have been heat treated must sometimes be combined with one another for the same application, e.g. within the same building facade. Consequently, it was previously necessary to develop and produce two types of stacks of low-emissivity layers in parallel, one for non-toughened glazing units and the other for glazing units intended to be toughened or bent, and this is complicated both in terms of research and development and in production stock management in particular. Since then, so-called "self-matchable" coating stacks have been developed that change very little in their properties, in particular their optical and energy properties, for the case where the substrate is subjected to a toughening or bending type of heat treatment.

Moreover, while the principles ruling the optical properties of materials forming the layers are well known, an additional difficulty lies in the production methods of these glazing units. The deposition conditions and in particular the deposition rate are dependent on the nature of the materials considered. The deposition rate must be sufficient for economically acceptable industrial production. It depends on multiple factors that guarantee stability of function over time and over the whole surface of the sheet and the absence of defects in the coating.

Several solutions have been proposed to meet these diverse requirements, but no solution has provided a really satisfactory glazing unit that will allow us to comply with the requirements of these new demands.

EP 1 140 721 describes coating stacks of silver-based low-emissivity layers of the type glass / dielectric I / Ag / AZO / dielectric II, in which, inter alia, the first dielectric includes a lower layer of zinc-tin mixed oxide and an upper layer of zinc oxide, and the second dielectric is of zinc-tin mixed oxide. EP 1 140 721 gives us to understand that the coating stacks that it describes can be heat treated and that they only exhibit slight variations in their optical properties after heat treatment. However, it has been shown that after heat treatment a haze and unacceptable spots appeared on layers of this type (see our comparative example 1 described below).

Document WO 2007/080428 had already noted this disadvantage and sought to resolve it. To achieve this, it proposed a first dielectric comprising at least three layers; in order starting from the glass: aluminium (oxy)nitride / tin oxide or zinc-tin mixed oxide / zinc oxide, and a second dielectric comprising at least two layers: a main layer of zinc-tin mixed oxide and a fine protective end layer with a thickness of less than 10 nm. However, this solution has a not inconsiderable fault: the chemical stability of this product before heat treatment is not sufficient (see our comparative examples 2 and 3 described below). Hence, since these layers must be able to be used without subsequent heat treatment or else stored and possibly transported sometimes long before undergoing a heat treatment, their ageing resistance before heat treatment must be adequate.

Thus, the aim of the invention is to seek to develop a new type of stack of thin low-emissivity layers that is effective in terms of optical and energy properties and that retains these performance levels if then subjected to a toughening or bending type of heat treatment or not.

The following information is used in the present invention:

- light transmission (LT) is the percentage of incident light flux, illuminant D65/2°, transmitted by the glazing.
- light reflection (LR) is the percentage of incident light flux, illuminant D65/2°, reflected by the glazing. It may be measured from the layer side (LRc) or the substrate side (LRg).
- energy transmission (ET) is the percentage of incident energy radiation transmitted by the glazing calculated in accordance with standard EN410.
- energy reflection (ER) is the percentage of incident energy radiation reflected by the glazing calculated in accordance with standard EN410. It may be measured on the external side of the building or vehicle (ERext) or the internal side of the building or vehicle (ERint).
- solar factor (SF or g) is the percentage of incident energy radiation that is directly transmitted by the glazing, on the one hand, and absorbed by this, then radiated in the opposite direction to the energy source in relation to the glazing. It is here calculated in accordance with standard EN410.
- the U value (coefficient k) and emissivity ($\varepsilon$) are calculated in accordance with standards EN673 and ISO 10292.
- the CIELAB 1976 values (L*a*b*) are used to define the tints. They are measured with illuminant D65/10°.
- $\Delta E* = \sqrt{\left(\Delta L *\right)^2 + \left(\Delta a *\right)^2 + \left(\Delta b *\right)^2}$ represents the tint variation during the heat treatment, i.e. the difference between before and after heat treatment colours.
- the resistance per square ($R^2$) ("sheet resistance"), expressed in ohms per square ($\Omega/\square$), measures the electrical resistance of thin films.
- When values are referred to as "in the range of between a and b", they may be equal to a or b.
- The positioning of the stack of layers in a multiple glazing structure is given according to the classic sequential numbering of the faces of a glazing unit, face 1 being on the exterior of the building or vehicle and face 4 (in the case of a double glazing unit) or face 6 (in the case of a triple glazing unit) on the interior.
- When referring to silicon nitride or silicon oxide layers herein, it should be understood that the layers may also incorporate a small quantity of aluminium, as is well-known in the art of magnetron sputtered coatings. Such aluminium is included as doping agent, generally in a quantity of 10 Wt.% at most.
- For the sake of clarity, when using terms like "below", "above", "lower", "upper", "first" or "last" herein, it is always in the context of a sequence of layers starting from the glass below, going upward, further away from the glass. Such sequences may comprise additional intermediate layers, in between the defined layers, except when a direct contact is specified.

The present invention relates to a glazing unit according to claim 1 and the dependent claims present preferred embodiments.

The invention concerns a glazing unit comprising a transparent substrate provided with a stack of thin layers comprising, in order starting from the substrate, a first dielectric coating, an infrared radiation reflecting functional layer, a barrier layer directly superposed on the functional layer and a second dielectric coating, and only comprising a single functional layer. Indeed, the present invention does not concern other types of solar protection stacks of well-known structures comprising two or three infrared radiation reflecting functional layers. The glazing according to the invention is characterised in that (i) the first dielectric coating comprises a layer made from an oxide, in direct contact with the substrate, (ii) the barrier layer is based on zinc oxide or consists of an indium oxide possibly doped with tin and (iii) the second dielectric coating comprises, in order, a layer made from an oxide with a thickness greater than 5 nm and a layer made from a silicon nitride with a thickness greater than 10 nm.

Because of the particular selection of layers of the coating stack and primarily because of the combination of the presence of a layer made from an oxide in direct contact with the substrate and of an adequate layer of silicon nitride in the second dielectric coating, such glazing units can thus provide the following advantages (lamination on a standard 4 mm thick clear soda-lime float glass sheet incorporated into a double glazing unit with another standard 4 mm thick clear soda-lime float glass sheet, space between glass sheets of 15 mm filled to 90% with argon, stack of layers in position 3):

- a high light transmission (LT $\geq$ 73%) at the same time as a low emissivity ($\varepsilon \leq 0.074$ or $\varepsilon \leq 0.044$, preferably $\varepsilon \leq 0.024$) to limit heat losses;

- not too low a solar factor (SF or g between 50% and 65% or even 70%) allowing the solar energy radiation to pass through to thus benefit from free energy in winter;
- an insulating property enabling a value $U \leq 1.2$ W/(m$^2$K) or $U \leq 1.1$ W/(m$^2$K), preferably $U \leq 1.0$ W/(m$^2$K) to be reached;
- a neutrality of tint in transmission and in reflection, whether in a single glazing or multiple glazing, with preferred values in single glazing:

| | | | |
|---|---|---|---|
| in transmission: | $91 \leq L^* \leq 99$ | $-5 \leq a^* \leq +5$ | $-6 \leq b^* \leq +6$ |
| in reflection coating side: | $22 \leq L^* \leq 43$ | $-6 \leq a^* \leq +10$ | $-18 \leq b^* \leq 0$ |
| in reflection substrate side: | $23 \leq L^* \leq 45$ | $-6 \leq a^* \leq +8$ | $-16 \leq b^* \leq 0$ |

- the possibility of being heat treated, the coating being resistant to high temperatures, or of being used without heat treatment;
- an aesthetic appearance without flaw, with an extremely limited or even non-existent haze without or after heat treatment, and the absence of unacceptable spots after heat treatment;
- the retention of optical and energy properties virtually unchanged after heat treatment allowing the use of products that have been heat treated or not one beside the other ("self-matchability"): no or little change in colour in transmission and in reflection ($\Delta E^* \leq 8$, preferably $\leq 5$, more preferably $\leq 2$) and/or no or little change in light transmission and reflection and energy values ($\Delta = |$ (value before heat treatment) - (value after heat treatment) $| \leq 5$, preferably $\leq 3$, more preferably $\leq 1$), in single glazing and/or in multiple glazing.
- an adequate chemical stability for use without heat treatment or for the time interval before heat treatment, and in particular a result of the Cleveland test according to standard ISO 6270-1:1998 (exposure to wet vapours coming from a reservoir of demineralised water heated to 50°C) giving no discoloration visible to the naked eye after 1 day, preferably after 3 days.

The inventors have indeed found that not only was it essential to have a layer made from an oxide (and not, as in many known coating stacks, a nitride such as aluminium or silicon nitride) in direct contact with the substrate in particular to assure the chemical stability of the product that has not been heat treated, but also essential to have a layer of silicon nitride of adequate thickness, which they have determined to be greater than 10 nm, over an oxide layer of not insignificant thickness, which they have determined to be greater than 5 nm, in the second dielectric coating, in addition to a barrier layer based on zinc oxide or consists of an indium oxide possibly doped with tin, in particular for self-matchability and absence of defect after heat treatment.

Therefore, the first dielectric comprises a layer made from an oxide, as single layer or as the lowest layer. Advantageously, this layer made from an oxide, which is in direct contact with the substrate, is a layer of an oxide of at least one element selected from Zn, Sn, Ti and Zr. It is preferably a layer of zinc-tin mixed oxide, more preferably a layer of zinc-tin mixed oxide, in which the proportion of zinc-tin is close to 50-50% by weight ($Zn_2SnO_4$), e.g. 52-48 Wt.%. The zinc-tin mixed oxide may be advantageous in that it has a good deposition rate compared, for example, to $SiO_2$ or $Al_2O_3$, and/or in that it has a good stability compared, for example, to pure ZnO or bismuth oxide. Moreover, it may be advantageous in that it has less tendency to generate haze after heat treatment of the stack compared, for example, to oxides of Ti or Zr. The layer made from an oxide in direct contact with the substrate advantageously has a thickness of at least 5 nm, preferably at least 8 nm, more preferably at least 10 nm. These minimum thickness values allow, inter alia, the chemical stability of the product that has not been heat treated to be assured, as well as assuring the resistance to the heat treatment.

As the uppermost layer directly in contact with the functional layer, the first dielectric coating may advantageously also comprise a zinc oxide-based layer, sometimes referred to as "nucleation" or "wetting" layer, which assists the growth of the silver on top of it. This zinc oxide-based layer may consist of zinc oxide or possibly be doped with other metals, e.g. aluminium, in a proportion generally of 10% by weight at most, preferably around 2% by weight. It preferably has a thickness of 15 nm at most, preferably in the range of between 1.5 and 10 nm, more preferably between 2 and 8 nm.

The first dielectric coating may additionally comprise one or more other layers between the layer made from an oxide in direct contact with the substrate and the possible zinc oxide-based layer in contact with the functional layer: for example, one or more layers of dielectric material made from metal oxide, nitride or oxynitride, preferably ZnO, $TiO_2$, $SnO_2$, $Si_3N_4$, $ZrO_2$, zinc-tin mixed oxide or titanium-zirconium mixed oxide.

Advantageously, the first dielectric coating may comprise a dielectric material with a refractive index higher than 2.2, whether as oxide layer in direct contact with the substrate or above the latter. This type of material may indeed enable the light transmission of the glazing to be further increased. It is preferably an oxide of at least one element selected from Ti, Nb and Zr, more preferably titanium-zirconium mixed oxide, e.g. in a weight ratio of Ti/Zr close to 65/35.

The first dielectric coating preferably has a thickness of at least 10 nm or at least 15 nm, more preferably at least 20 nm or at least 25 nm. Its thickness is preferably 55 nm at most or 50 nm at most, more preferably 45 nm at most or 40 nm at most.

The infrared radiation reflecting functional layer is preferably a silver-based layer that may consist of silver or possibly be doped with palladium or gold, for example, in a proportion of 5% by weight at most, preferably of around 1% by weight. The incorporation of a small quantity of doping agent in the silver-based layer may improve the chemical stability of the stack. The functional layer advantageously has a thickness of at least 6 nm or at least 8 nm, preferably at least 10 nm. Its thickness is preferably 18 nm at most or 16 nm at most, more preferably 15 nm at most or 14 nm at most. These thickness ranges may enable the desired low emissivity function to be achieved while retaining a good light transmission.

According to the invention the stack comprises a barrier layer directly superposed on the functional layer, i.e. above and in direct contact with said functional layer. The barrier layer is either based on zinc oxide, (i.e. comprising Zn in a quantity of at least 50 at.%, preferably at least 60 at.%, more preferably at least 70 at.%, still more preferably at least 80 at.%, of the metallic part of the oxide), or consists of an indium oxide possibly doped with tin. More preferably, said barrier consists of a zinc oxide possibly doped with aluminium or of an indium oxide possibly doped with tin. Still more preferably, the barrier layer is a layer of pure ZnO (designated as iZnO) or a layer of zinc oxide doped with aluminium (designated as AZO) in a proportion of 10% by weight at most, preferably of around 2% by weight. It preferably has a thickness of 20 nm at most or 18 nm at most, preferably in the range of between 1 and 18 nm or between 2 and 18 nm, more preferably between 3 and 18 nm.

The second dielectric coating according to the invention comprises, in order still starting from the substrate: a layer made from an oxide other than silicon oxide with a thickness greater than 5 nm and a layer made from a silicon nitride or a silicon oxide with a thickness greater than 10 nm.

The layer made from an oxide other than silicon oxide with a thickness greater than 5 nm is preferably a layer of oxide of at least one element selected from Zn, Sn, Ti and Zr. It is preferably a layer of zinc-tin mixed oxide, more preferably a layer of zinc-tin mixed oxide, in which the proportion of zinc-tin is close to 50-50% by weight ($Zn_2SnO_4$), e.g. 52-48 Wt.%. It preferably has a thickness of at least 8 nm or at least 10 nm, more preferably at least 14 nm or at least 16 nm. Its thickness is preferably 40 nm at most or 35 nm at most, more preferably 30 nm at most or 28 nm at most.

Above this oxide layer, but not necessarily in direct contact with it, is the layer made from a silicon nitride or a silicon oxide. It has a thickness of at least 14 nm, more preferably at least 15 nm or at least 16 nm. Its thickness is preferably 30 nm at most or 28 nm at most, more preferably 25 nm at most or 22 nm at most. Silicon nitride is generally preferred to silicon oxide, since it may be easier to deposit industrially by magnetron sputtering and because it may provide in the last dielectric a better mechanical stability and a better resistance to heat treatment than a silicon oxide. This silicon nitride layer may be the last layer of the coating stack.

Advantageously, the second dielectric coating may comprise a protective topcoat forming the last layer of the coating stack. This preferably consists of an oxide or substoichiometric oxide of at least one element selected from Ti and Zr, more preferably of a titanium-zirconium mixed oxide, e.g. in a weight ratio of Ti/Zr close to 65/35. Such a layer may improve the chemical and/or mechanical stability of the glazing. Moreover, it may have a positive impact on the $\Delta E^*$ in reflection of the glazing on the external side of the building or vehicle. This protective topcoat preferably has a thickness of at least 2 nm, more preferably at least 3 nm. Its thickness is preferably 15 nm at most or 12 nm at most, more preferably 10 nm at most or 9 nm at most.

The second dielectric coating may additionally comprise one or more other layers below the layer made from an oxide with a thickness greater than 5 nm, between the latter and the layer made from a silicon nitride with a thickness greater than 10 nm, or above the layer made from a silicon nitride with a thickness greater than 10 nm: for example, one or more layers of dielectric material made from metal oxide, nitride or oxynitride, preferably ZnO, $TiO_2$, $SnO_2$, $Si_3N_4$, $ZrO_2$, zinc-tin mixed oxide or titanium-zirconium mixed oxide.

Advantageously, the second dielectric coating may comprise a dielectric material with a refractive index higher than 2.2, whether as the layer made from an oxide with a thickness greater than 5 nm or forming another distinct layer. This type of material may indeed enable the light transmission of the glazing to be further increased. It is preferably an oxide of at least one element selected from Ti, Nb and Zr, more preferably titanium-zirconium mixed oxide, e.g. in a weight ratio of Ti/Zr of close to 65/35.

The second dielectric coating preferably has a thickness of at least 25 nm or at least 28 nm, more preferably at least 30 nm or at least 35 nm. Its thickness is preferably 75 nm at most, 70 nm at most or 65 nm at most, more preferably 60 nm at most or 55 nm at most.

In certain embodiments of the invention the stack of thin layers comprises at least or consists of, in order starting from the substrate:

      (i) a layer of zinc-tin mixed oxide with a thickness in the range of between 27 and 45 nm,
      (ii) a layer of zinc oxide, possibly doped, with a thickness in the range of between 2 and 8 nm,
      (iii) a silver-based functional layer with a thickness in the range of between 8 and 16 nm,
      (iv) a barrier layer of zinc oxide, possibly doped with aluminium, with a thickness in the range of between 1 and 18 nm,
      (v) a layer of zinc-tin mixed oxide with a thickness in the range of between 14 and 30 nm,

(vi) a layer of silicon nitride with a thickness in the range of between 14 and 30 nm, and

(vii) optionally, a layer of titanium-zirconium mixed oxide with a thickness in the range of between 2 and 10 nm.

In other embodiments of the invention the stack of thin layers comprises at least or consists of, in order starting from the substrate:

(i) a layer of zinc-tin mixed oxide with a thickness in the range of between 5 and 30, preferably 20, nm,

(ii) a layer of titanium-zirconium mixed oxide with a thickness in the range of between 5 and 25 nm,

(iii) a layer of zinc oxide, possibly doped, with a thickness in the range of between 2 and 8 nm,

(iv) a silver-based functional layer with a thickness in the range of between 8 and 16 nm,

(v) a barrier layer of zinc oxide, possibly doped with aluminium, with a thickness in the range of between 1 and 18 nm,

(vi) a layer of zinc-tin mixed oxide with a thickness in the range of between 5, preferably 14, and 30 nm,

(vii) a layer of silicon nitride with a thickness in the range of between 14 and 30 nm, and

(viii) optionally, a layer of titanium-zirconium mixed oxide with a thickness in the range of between 2 and 10 nm.

In other embodiments of the invention the stack of thin layers comprises at least or consists of, in order starting from the substrate:

(i) a layer of zinc-tin mixed oxide with a thickness in the range of between 5 and 30, preferably 20, nm,

(ii) a layer of titanium-zirconium mixed oxide with a thickness in the range of between 5 and 25 nm,

(iii) a layer of zinc oxide, possibly doped, with a thickness in the range of between 2 and 8 nm,

(iv) a silver-based functional layer with a thickness in the range of between 8 and 16 nm,

(v) a barrier layer of zinc oxide, possibly doped with aluminium, with a thickness in the range of between 1 and 18 nm,

(vi) a layer of titanium-zirconium mixed oxide with a thickness in the range of between 3, preferably 5, and 20 nm,

(vii) a layer of zinc-tin mixed oxide with a thickness in the range of between 2, preferably 5, and 25 nm,

(viii) a layer of silicon nitride with a thickness in the range of between 14 and 30 nm, and

(ix) optionally, a layer of titanium-zirconium mixed oxide with a thickness in the range of between 2 and 10 nm.

The glazing units according to the invention are preferably used in multiple glazing units, e.g. double or triple glazing units. They may have the following properties:

| | Single Glazing (SG) | Double Glazing (DG) filled 90% with Ar, layer in position 3, 4 mm clear glasses |
|---|---|---|
| LT before or after heat treatment | $\geq 80\%$, $\geq 85\%$, $\geq 86\%$ | $\geq 73\%$, $\geq 75\%$, $\geq 78\%$ |
| LRc before or after heat treatment | $\leq 14\%$, $\leq 10\%$, $\leq 8\%$ | - |
| LRg before or after heat treatment | $\leq 16\%$, $\leq 12\%$, $\leq 10\%$ | - |
| ET before or after heat treatment | $\geq 50\%$, $\geq 55\%$, $\geq 58\%$, $\geq 60\%$ | - |
| ERc before or after heat treatment | $\leq 40\%$, $\leq 35\%$, $\leq 33\%$ | - |
| ERg before or after heat treatment | $\leq 34\%$, $\leq 30\%$, $\leq 27\%$ | - |
| $\Delta$LT, $\Delta$LRc, $\Delta$LRg, $\Delta$ET, $\Delta$ERc, $\Delta$ERg before/after heat treatment | $\leq 5$, $\leq 3$, $\leq 1$ | $\leq 5$, $\leq 3$, $\leq 1$ |
| $R^2$ before or after heat treatment | between 2 and 7 $\Omega/\square$ | - |
| | between 2 and 4 $\Omega/\square$ | |
| $\Delta R^2$ before/after heat treatment | $\leq 2.0$, $\leq 1.5$ | - |

(continued)

|  | | Single Glazing (SG) | Double Glazing (DG) filled 90% with Ar, layer in position 3, 4 mm clear glasses |
|---|---|---|---|
| g before or after heat treatment | | - | between 55% and 70% between 58% and 64% |
| $\Delta$g before/after heat treatment | | - | $\leq 5, \leq 3, \leq 1$ |
| Colour in transmission before or after heat treatment | L* | between 91 and 99 | |
| | a* | between -5 and 5 | |
| | b* | between -6 and + 6 | |
| $\Delta$E* in transmission | | $\leq 8, \leq 5, \leq 2$ | $\leq 8, \leq 5, \leq 2$ |
| Colour in reflection layer side in SG or external side in DG before or after heat treatment | L* | between 22 and 43 | |
| | a* | between -6 and + 10 | |
| | b* | between -18 and 0 | |
| $\Delta$E* in reflection (layer or ext.) | | $\leq 8, \leq 5, \leq 2$ | $\leq 8, \leq 5, \leq 2$ |
| Colour in reflection glass side in SG or internal side in DG before or after heat treatment | L* | between 23 and 45 | |
| | a* | between -6 and +8 | |
| | b* | between -18 and 0 | |
| $\Delta$E* in reflection (glass or int.) | | $\leq 8, \leq 5, \leq 2$ | $\leq 8, \leq 5, \leq 2$ |

Particular embodiments of the invention will now be described by way of example with reference to Examples 1-8 and comparative examples 1-6.

All thicknesses of the examples and comparative examples are given in nm. All the layers have been deposited using magnetic field-assisted cathodic sputtering under vacuum. When heat treatment took place, except otherwise stated, this was conducted in the following conditions: curing in a static oven at 670°C for 7 min. 30 sec.

**Example 1**

The following stack of layers according to the invention was deposited onto a glass sheet:

| glass | $Zn_2SnO_4$ | ZnO | Ag | ZnO:Al (2% wt.) | $Zn_2SnO_4$ | $Si_3N_4$ |
|---|---|---|---|---|---|---|
| | 32 | 5 | 13.3 | 15 | 21 | 20 |

The resulting glazing has a resistance per square of 3.73 $\Omega/\square$. It is then subjected to a heat treatment. The resistance per square measured on the heat treated product is 2.84 $\Omega/\square$. The heat treated product exhibits no haze or spots.

**Example 2**

The following stack of layers according to the invention was deposited onto a glass sheet:

| glass | Zn$_2$SnO$_4$ | TZO | ZnO | Ag | ZnO:Al (2% wt.) | Zn$_2$SnO$_4$ | Si$_3$N$_4$ |
|---|---|---|---|---|---|---|---|
| | 10 | 18 | 4 | 13.5 | 5 | 29 | 20 |

It is characterised by the additional presence of a material with a high refractive index in the first dielectric coating. The heat treated product exhibits no haze or spots and before heat treatment the product has a very high chemical stability (no discoloration visible to the naked eye after the Cleveland test).

The coating stack according to Example 2 gave the following properties:

| | | Single Glazing (SG) |
|---|---|---|
| LT before / after heat treatment | | 85.2% / 86.7% |
| LRc before / after heat treatment | | 7.77% / 8.1% |
| LRg before / after heat treatment | | 9.45% / 8.1% |
| R$^2$ before / after heat treatment | | 2.89 $\Omega/\square$ / 2.08 $\Omega/\square$ |
| Colour in transmission before / after heat treatment | L* | 93.91 / 94.56 |
| | a* | -1.64 / -1.79 |
| | b* | 2.90 / 2.32 |
| $\Delta$E* in transmission | | 0.88 |
| Colour in reflection layer side in SG or external side in DG before / after heat treatment | L* | 33.88 / 34.44 |
| | a* | -0.51 / 1.8 |
| | b* | -10.46 / -10.49 |
| $\Delta$E* in reflection (layer or ext.) | | 2.38 |
| Colour in reflection glass side in SG or internal side in DG before / after heat treatment | L* | 37.17 / 36.53 |
| | a* | -0.78 / 1.26 |
| | b* | -9.09 / -9.60 |
| $\Delta$E* in reflection (glass or int.) | | 2.20 |

## Example 3

The following stack of layers according to the invention was deposited onto a glass sheet:

| glass | Zn$_2$SnO$_4$ | TZO | ZnO | Ag | ZnO:Al (2% wt.) | Zn$_2$SnO$_4$ | Si$_3$N$_4$ | TZO |
|---|---|---|---|---|---|---|---|---|
| | 10 | 19 | 3 | 13.5 | 3 | 22 | 18 | 10 |

It is characterised by the additional presence of a material with a high refractive index in the first dielectric coating and the presence of a protective topcoat. Once again, the product here exhibits no haze or spots after heat treatment. Moreover, before heat treatment the product has a very high chemical stability (no discoloration visible to the naked eye after the Cleveland test).

Samples according to Examples 2 and 3 were subjected to the "dry brush test" (DBT) and to the climatic chamber test to analyse the influence of the protective topcoat of TZO.

The dry brush test is used to evaluate a layer's resistance to erosion as a result of friction. The details of this test are given in ASTM Standard D 2486 - 00. The samples were subjected to the method of test A for 500 cycles, then their degradation was observed and compared. The sample with the protective topcoat of TZO (Ex. 3) exhibited markedly less degradation than the sample without a surface protective layer of TZO (Ex. 2).

In the climatic chamber test the samples were placed in a chamber filled with an atmosphere of H$_2$O and

subjected to temperature cycles each of 2 hours, during which the temperature varies from 45°C to 55°C returning to 45°C. The samples according to Examples 2 and 3 exhibited quite similar results after 1 day and 3 days, with a slight advantage to the coating stack with the protective topcoat of TZO (Ex. 3).

The coating stack according to Example 3 gave the following properties:

| | | Single Glazing (SG) | Double Glazing (DG) filled 90% with Ar, layer in position 3, 4 mm clear glasses |
|---|---|---|---|
| LT before / after heat treatment | | 86.7% / 87.3% | 78.5% / 79.1% |
| LRc before / after heat treatment | | 6.9% / 7.8% | - |
| LRg before / after heat treatment | | 8.7% / 8.9% | - |
| ET before / after heat treatment | | 60.8% / 61.2% | - |
| ERc before / after heat treatment | | 29.7% / 31.1% | - |
| ERg before / after heat treatment | | 24.5% / 25.5% | - |
| $R^2$ before / after heat treatment | | 2.87 $\Omega/\square$ / 2.10 $\Omega/\square$ | - |
| g before / after heat treatment | | - | 60.4 / 59.5 |
| $\Delta$g before/after heat treatment | | - | $\leq 5. \leq 3, \leq 1$ |
| Colour in transmission before / after heat treatment | L* | 94.55 / 94.81 | 90.94 / 91.21 |
| | a* | -1.70 / -1.82 | -2.51 / -2.60 |
| | b* | 2.93 / 2.76 | 2.83 / 2.66 |
| $\Delta$E* in transmission | | 0.33 | 0.33 |
| Colour in reflection layer side in SG or external side in DG before / after heat treatment | L* | 32.12 / 33.95 | 44.28 / 45.26 |
| | a* | -0.63 / 1.34 | -1.09 / -0.05 |
| | b* | -11.98 / -12.16 | -7.03 / -7.38 |
| $\Delta$E* in reflection (layer or ext.) | | 2.69 | 1.47 |
| Colour in reflection glass side in SG or internal side in DG before / after heat treatment | L* | 35.73 / 36.17 | 42.72 / 46.15 |
| | a* | -1.03 / 0.67 | -1.65 / -0.49 |
| | b* | -10.18 / -10.6 | -6.64 / -7.04 |
| $\Delta$E* in reflection (glass or int.) | | 1.81 | 1.30 |

## Comparative Example 1

The following stack of layers not in conformity with the invention was deposited onto a glass sheet:

| glass | $Zn_2SnO_4$ | ZnO | Ag | ZnO:Al (2% wt.) | $Zn_2SnO_4$ |
|---|---|---|---|---|---|
| | 32 | 5 | 13.3 | 15 | 41 |

This is a coating stack in accordance with the teaching of EP 1 140 721. It exhibits an $R^2$ before and after heat treatment of 3.34 $\Omega/\square$ and 3.80 $\Omega/\square$ respectively. Upon examination with the naked eye, the heat treated product exhibits a haze and unacceptable spots.

Compared to Example 1, this demonstrates the advantage in particular of having a layer made from a silicon nitride in the second dielectric coating to prevent any haze and spots after heat treatment.

## Comparative Examples 2 and 3

The following stack of layers not in conformity with the invention were deposited onto a glass sheet:

| Comp. Ex. 2 | glass | AlSiN | ZnSnO$_x$:Al | TiO$_x$ | ZnO:Al | Ag | ZnSnO$_x$:Al | ZnO | AlN | ZnSnO$_x$ | |
|---|---|---|---|---|---|---|---|---|---|---|---|
| | | 43 | 4 | 0.9 | 7.7 | 8 | 7.7 | 1.3 | 50 | 12 | |
| Comp. Ex. 3 | glass | AlSiN | ZnSnO$_x$:Al | TiO$_x$ | ZnO:Al | Ag | ZnSnO$_x$:Al | ZnO | AlN | ZnSnO$_x$ | SiN |
| | | 43 | 4 | 0.9 | 7.7 | 8 | 7.7 | 1.3 | 50 | 12 | 20 |

Before any heat treatment they were subjected to the Cleveland test to evaluate their chemical stability. The results were poor: after only 1 day a discoloration was visible to the naked eye and after 3 days this was even further pronounced.

For comparison, the examples according to the invention do not exhibit any discoloration visible to the naked eye, either after 1 or 3 days in the Cleveland test. This demonstrates the advantage in particular of having a layer made from an oxide in direct contact with the substrate for a better chemical stability of the product that has not been heat treated.

### Examples 4 to 6

The following stacks of layers according to the invention were deposited onto a glass sheet and heat treated in a static oven at 700°C during 9 minutes (examples 4-5) or 5 minutes (example 6). The following properties were observed:

### Example 4

| glass | ZSO5 | TZO | ZnO | Ag | AZO | ZSO5 | SiN | TZO |
|---|---|---|---|---|---|---|---|---|
| | 13 | 19 | 3 | 13 | 3 | 18 | 19 | 7,5 |

| | | Single Glazing(SG) | | Double Glazing(DG) filled 90% with Ar, layer in position 3, 4 mm clear glasses | |
|---|---|---|---|---|---|
| | | bef. HT | aft. HT | bef. HT | aft. HT |
| LT before / after heat treatment | | 87,5 | 88,42 | 79,4 | 79,7 |
| LRc before / after heat treatment | | 5,66 | 6,27 | 12,63 | 13,2 |
| LRg before / after heat treatment | | 6,97 | 7,16 | 13,24 | 13,6 |
| ET before / after heat treatment | | 60,23 | 61,17 | 52,96 | 53,6 |
| ERc before / after heat treatment | | 29,17 | 29,93 | 27,92 | 28,4 |
| ERg before / after heat treatment | | 23,79 | 24,29 | 27,44 | 27,9 |
| R$^2$ before / after heat treatment | | 3 | 2 | | |
| g before / after heat treatment | | | | 61,14 | 60,2 |
| $\Delta$g before/after heat treatment | | | | | -0,94 |
| Colour in transmission before / after heat treatment | L* | 94,92 | 95,3 | 91,4 | 91,6 |
| | a* | -1,92 | -2 | -2,69 | -2,7 |
| | b* | 2,37 | 2,12 | 2,23 | 2,1 |
| $\Delta$E* in transmission | | | 0,46 | | 0,24 |
| Colour in reflection layer side in SG or external side in DG before / after heat treatment | L* | 28,86 | 30,41 | 42,37 | 43,1 |
| | a* | 2,58 | 4,07 | 0,58 | 1,4 |
| | b* | -10,47 | -10,3 | -5,72 | -5,8 |

(continued)

|  | | Single Glazing(SG) | | Double Glazing(DG) filled 90% with Ar, layer in position 3, 4 mm clear glasses | |
|---|---|---|---|---|---|
|  | | bef. HT | aft. HT | bef. HT | aft. HT |
| ΔE* in reflection (layer or ext.) | | | 2,16 | | 1,10 |
| Colour in reflection glass side in SG or internal side in DG before / after heat treatment | L* | 28,86 | 32,47 | 43,31 | 43,6 |
| | a* | 2,58 | 3,29 | -0,07 | 1 |
| | b* | -10,47 | -9,62 | -6,04 | -6 |
| ΔE* in reflection (glass or int.) | | | 3,78 | | 1,11 |
| bef. HT = before heat treatment aft. HT = after heat treatment | | | | | |

## Example 5

| glass | ZSO5 | TZO | ZnO | Ag | AZO | ZSO5 | SiN | TZO |
|---|---|---|---|---|---|---|---|---|
|  | 15,5 | 17,5 | 3 | 10,5 | 3 | 10 | 19 | 7 |

|  | | Single Glazing(SG) | | Double Glazing(DG) filled 90% with Ar, layer in position 3, 4 mm clear glasses | |
|---|---|---|---|---|---|
|  | | bef. HT | aft. HT | bef. HT | aft. HT |
| LT before / after heat treatment | | 88,4 | 89,8 | 80,2 | 81 |
| LRc before / after heat treatment | | 4,87 | 4,75 | 11,99 | 11,86 |
| LRg before / after heat treatment | | 5,68 | 5,38 | 12,06 | 11,87 |
| ET before / after heat treatment | | 63,98 | 64,97 | 56,04 | 56,6 |
| ERc before / after heat treatment | | 24,49 | 25,4 | 24,61 | 25,24 |
| ERg before / after heat treatment | | 19,76 | 20,5 | 23,71 | 24,38 |
| $R^2$ before / after heat treatment | | 5 | 3,6 | | |
| g before / after heat treatment | | | | 64,71 | 63,93 |
| Δg before/after heat treatment | | | 0 | | -0,78 |
| Colour in transmission before / after heat treatment | L* | 95,31 | 95,91 | 91,76 | 92,12 |
| | a* | -1,28 | -1,38 | -2,1 | -2,17 |
| | b* | 1,12 | 1,14 | 1,09 | 1,24 |
| ΔE* in transmission | | | 0,61 | | 0,40 |
| Colour in reflection layer side in SG or external side in DG before / after heat treatment | L* | 26,58 | 26,26 | 41,32 | 41,11 |
| | a* | -1,47 | 0,78 | -1,28 | -0,28 |
| | b* | -4,97 | -6,58 | -2,67 | -3,41 |
| ΔE* in reflection (layer or ext.) | | | 2,79 | | 1,26 |

(continued)

|  | | Single Glazing(SG) | | Double Glazing(DG) filled 90% with Ar, layer in position 3, 4 mm clear glasses | |
|---|---|---|---|---|---|
|  | | bef. HT | aft. HT | bef. HT | aft. HT |
| Colour in reflection glass side in SG or internal side in DG before / after heat treatment | L* | 28,84 | 28,05 | 41,47 | 41,17 |
| | a* | -1,51 | 0,71 | -1,87 | -0,6 |
| | b* | -6,24 | -7,26 | -3,86 | -4,27 |
| ΔE* in reflection (glass or int.) | | | 2,57 | | 1,37 |

## Example 6

| glass | ZSO5 | TZO | ZnO | Ag | AZO | ZSO5 | SiN | TZO |
|---|---|---|---|---|---|---|---|---|
|  | 23,5 | 13,1 | 3 | 10,8 | 3 | 12 | 20 | 4 |

|  | | Single Glazing(SG) | | Double Glazing (DG) filled 90% with Ar, layer in position 3, 4 mm clear glasses | |
|---|---|---|---|---|---|
|  | | bef. HT | aft. HT | bef. HT | aft. HT |
| LT before / after heat treatment | | 88,7 | 88,9 | 80,1 | 80,3 |
| LRc before / after heat treatment | | 4,8 | 4,7 | | |
| LRg before / after heat treatment | | 5,5 | 5,8 | | |
| ET before / after heat treatment | | 63,8 | 63,9 | | |
| ERc before / after heat treatment | | 25,2 | 26,3 | | |
| ERg before / after heat treatment | | 20,2 | 21,1 | | |
| $R^2$ before / after heat treatment | | | | | |
| g before / after heat treatment | | | | 63,8 | 63 |
| Δg before/after heat treatment | | | | | -0,8 |
| Colour in transmission before / after heat treatment | L* | 95,42 | 95,51 | 91,71 | 91,8 |
| | a* | -1,67 | -1,77 | -2,47 | -2,55 |
| | b* | 1,29 | 1,52 | 1,37 | 1,57 |
| ΔE* in transmission | | | 0,27 | | 0,23 |
| Colour in reflection layer side in SG or external side in DG before / after heat treatment | L* | 26,14 | 25,97 | 41,39 | 41,32 |
| | a* | -0,41 | 2,13 | -0,88 | 0,23 |
| | b* | -6,24 | -8,18 | -3,29 | -4,23 |
| ΔE* in reflection (layer or ext.) | | | 3,20 | | 1,46 |
| Colour in reflection glass side in SG or internal side in DG before / after heat treatment | L* | 29,14 | 28,82 | 41,8 | 41,66 |
| | a* | -0,61 | 1,85 | -1,44 | 0 |
| | b* | -6,85 | -8,16 | -4,09 | -4,81 |
| ΔE* in reflection (glass or int.) | | | 2,81 | | 1,62 |

**Examples 7 and 8**

The following stacks of layers were deposited onto a glass sheet and heat treated in a static oven at 670°C during 6 minutes 30 seconds. The layer stack according to example 8 does not quite fall within the ambit of claim 1 in that the outer $Zn_2SnO_4$ layer is only 3.1 nm thick. The example is thus to be regarded as a reference example, visual appearance of the coated glass after heat treatment was good (no scratches) and the following properties were observed:

| glass | $Zn_2SnO_4$ | ZnO | Ag | ZnO:Al (2% wt.) | $Zn_2SnO_4$ | $Si_3N_4$ |
|---|---|---|---|---|---|---|
| ex. 7 | 25 | 7 | 10 | 7 | 6.3 | 25.7 |
| ex. 8 | 25 | 7 | 10 | 4.4 | 3.1 | 28.9 |

| | $\Delta E^*$ in transmission | $\Delta LT$ bef. & aft. HT | $R^2$ bef. HT | $R^2$ aft. HT |
|---|---|---|---|---|
| ex. 7 | 0.69 | 1.24 | 6.10 | 4.81 |
| ex. 8 | 0.55 | 0.99 | 5.77 | 4.44 |

**Comparative Examples 4 to 6**

The following stacks of layers not in accordance with the invention were deposited onto a glass sheet and heat treated in a static oven at 670°C during 6 minutes 30 seconds. The visual appearance of the coated glass after heat treatment was poor (lots of scratches revealed by the heat treatment) and the following properties were observed:

| glass | $Zn_2SnO_4$ | ZnO | Ag | ZnO:Al (2% wt.) | $Si_3N_4$ |
|---|---|---|---|---|---|
| c. ex. 4 | 25 | 7 | 10 | 4 | 32 |
| c. ex. 5 | 25 | 7 | 10 | 1.9 | 32 |
| c. ex. 6 | 25 | 7 | 10 | 7 | 32 |

| | $\Delta E^*$ in transmission | $\Delta LT$ bef. & aft. HT | $R^2$ bef. HT | $R^2$ aft. HT |
|---|---|---|---|---|
| c. ex. 4 | 3.3 | 4.67 | 4.89 | 14.6 |
| c. ex. 5 | 2.2 | 3.18 | 6.36 | 10.3 |
| c. ex. 6 | 2.24 | 3.27 | 4.84 | 5.2 |

The comparison between examples 7 and 8 and comparative examples 4 to 6, show the advantageous effects of the presence of the layer made from an oxide other than silicon oxide in the upper dielectric coating, between the barrier layer and the silicon nitride layer: no scratches revealed after heat treatment, lower change in light transmission due to heat treatment and lower sheet resistance after heat treatment.

**Claims**

1.   Glazing unit comprising a transparent substrate provided with a stack of thin layers comprising, in order starting from the substrate, a first dielectric coating, an infrared radiation reflecting functional layer, a barrier layer directly superposed on the functional layer and a second dielectric coating, and comprising one functional layer only, **characterised in that** (i) the first dielectric coating comprises a layer made from an oxide, in direct contact with the substrate, (ii) the barrier layer is based on zinc oxide or consists of an indium oxide possibly doped with tin and (iii) the second dielectric coating comprises, in order, a layer made from an oxide other than silicon oxide with a thickness greater than 5 nm and a layer made from a silicon nitride or a silicon oxide with a thickness of at least 14 nm.

2.   Glazing according to claim 1, in which the layer made from an oxide in direct contact with the substrate is a layer of zinc-tin mixed oxide.

3. Glazing according to one of claims 1 or 2, in which the layer made from an oxide in direct contact with the substrate has a thickness of at least 5 nm.

4. Glazing according to any one of the preceding claims, in which directly in contact with the functional layer, the first dielectric coating comprises a zinc oxide-based layer.

5. Glazing according to claim 4, in which the zinc oxide-based layer has a thickness of 15 nm at most, preferably in the range of between 1.5 and 10 nm.

6. Glazing according to any one of the preceding claims, in which the barrier layer consists of a zinc oxide possibly doped with aluminium.

7. Glazing according to any one of the preceding claims, in which the barrier layer has a thickness of 20 nm at most, preferably in the range of between 1 and 18 nm.

8. Glazing according to any one of the preceding claims, in which the second dielectric coating comprises a protective topcoat forming the last layer of the stack that consists of an oxide or substoichiometric oxide of at least one element selected from Ti and Zr.

9. Glazing according to claim 8, in which the protective topcoat has a thickness of 15 nm at most, preferably in the range between 2 and 10 nm.

10. Glazing according to any one of the preceding claims, in which the stack of thin layers comprises, in order starting from the substrate:

   (i) a layer of zinc-tin mixed oxide with a thickness in the range of between 27 and 45 nm,
   (ii) a layer of zinc oxide, possibly doped, with a thickness in the range of between 2 and 8 nm,
   (iii) a silver-based functional layer with a thickness in the range of between 8 and 16 nm,
   (iv) a barrier layer of zinc oxide, possibly doped with aluminium, with a thickness in the range of between 1 and 18 nm,
   (v) a layer of zinc-tin mixed oxide with a thickness in the range of between 14 and 30 nm,
   (vi) a layer of silicon nitride with a thickness in the range of between 14 and 30 nm, and
   (vii) optionally, a layer of titanium-zirconium mixed oxide with a thickness in the range of between 2 and 10 nm.

11. Glazing according to any one of claims 1 to 9, in which the stack of thin layers comprises a layer of a dielectric material with a refractive index higher than 2.2 in at least one of the two dielectric coatings.

12. Glazing according to claim 11, in which the dielectric material with a refractive index higher than 2.2 is an oxide of at least one element selected from Ti, Nb and Zr.

13. Glazing according to any one of claims 11 and 12, in which the stack of thin layers comprises, in order starting from the substrate:

   (i) a layer of zinc-tin mixed oxide with a thickness in the range of between 5 and 20 nm,
   (ii) a layer of titanium-zirconium mixed oxide with a thickness in the range of between 5 and 25 nm,
   (iii) a layer of zinc oxide, possibly doped, with a thickness in the range of between 2 and 8 nm,
   (iv) a silver-based functional layer with a thickness in the range of between 8 and 16 nm,
   (v) a barrier layer of zinc oxide, possibly doped with aluminium, with a thickness in the range of between 1 and 18 nm,
   (vi) a layer of zinc-tin mixed oxide with a thickness in the range of between 14 and 30 nm,
   (vii) a layer of silicon nitride with a thickness in the range of between 14 and 30 nm, and
   (viii) optionally, a layer of titanium-zirconium mixed oxide with a thickness in the range of between 2 and 10 nm.

14. Glazing according to any one of the preceding claims showing a variation in colour in transmission and in reflection between the glazing that has not been heat treated and the heat treated glazing defined by a $\Delta E^*$ in single glazing of 8 at most, preferably 5 at most.

15. Glazing according to any one of the preceding claims showing a variation in the light and energy transmission and reflection values between the glazing that has not been heat treated and the heat treated glazing in single glazing of 5 at most, preferably 3 at most.

**Patentansprüche**

1. Verglasung, welche ein transparentes Substrat umfasst, das mit einem Stapel dünner Schichten versehen ist, die in der beim Substrat beginnenden Reihenfolge eine erste dielektrische Beschichtung, eine Infrarotstrahlung reflektierende funktionelle Schicht, eine Barriereschicht, die der funktionellen Schicht direkt überlagert ist, und eine zweite dielektrische Beschichtung umfassen und nur eine funktionelle Schicht umfassen, **dadurch gekennzeichnet, dass** (i) die erste dielektrische Beschichtung eine Schicht aus einem Oxid in direktem Kontakt mit dem Substrat umfasst, (ii) die Barriereschicht auf Zinkoxid beruht oder aus möglicherweise mit Zinn dotiertem Indiumoxid besteht und (iii) die zweite dielektrische Beschichtung in dieser Reihenfolge eine Schicht aus einem von Siliciumoxid verschiedenen Oxid mit einer Dicke von mehr als 5 nm und eine Schicht aus Siliciumnitrid oder Siliciumoxid mit einer Dicke von wenigstens 14 nm umfasst.

2. Verglasung nach Anspruch 1, wobei die Schicht aus einem Oxid in direktem Kontakt mit dem Substrat eine Schicht aus Zink-Zinn-Mischoxid ist.

3. Verglasung nach einem der Ansprüche 1 oder 2, wobei die Schicht aus einem Oxid in direktem Kontakt mit dem Substrat eine Dicke von wenigstens 5 nm aufweist.

4. Verglasung nach einem der vorhergehenden Ansprüche, wobei direkt in Kontakt mit der funktionellen Schicht die erste dielektrische Beschichtung eine auf Zinkoxid beruhende Schicht umfasst.

5. Verglasung nach Anspruch 4, wobei die auf Zinkoxid beruhende Schicht eine Dicke von höchstens 15 nm, vorzugsweise im Bereich zwischen 1,5 und 10 nm, aufweist.

6. Verglasung nach einem der vorhergehenden Ansprüche, wobei die Barriereschicht aus möglicherweise mit Aluminium dotiertem Zinkoxid besteht.

7. Verglasung nach einem der vorhergehenden Ansprüche, wobei die Barriereschicht eine Dicke von höchstens 20 nm, vorzugsweise im Bereich zwischen 1 und 18 nm, aufweist.

8. Verglasung nach einem der vorhergehenden Ansprüche, wobei die zweite dielektrische Beschichtung eine schützende oberste Beschichtung umfasst, welche die letzte Schicht des Stapels bildet, welche aus einem Oxid oder einem substöchiometrischen Oxid wenigstens eines aus Ti und Zr ausgewählten Elements besteht.

9. Verglasung nach Anspruch 8, wobei die oberste Beschichtung eine Dicke von höchstens 15 nm, vorzugsweise im Bereich zwischen 2 und 10 nm, aufweist.

10. Verglasung nach einem der vorhergehenden Ansprüche, wobei der Stapel dünner Schichten in der beim Substrat beginnenden Reihenfolge wenigstens Folgendes umfasst:

(i) eine Schicht aus Zink-Zinn-Mischoxid mit einer Dicke im Bereich zwischen 27 und 45 nm,
(ii) eine Schicht aus Zinkoxid, möglicherweise dotiert, mit einer Dicke im Bereich zwischen 2 und 8 nm,
(iii) eine auf Silber beruhende funktionelle Schicht mit einer Dicke im Bereich zwischen 8 und 16 nm,
(iv) eine Barriereschicht aus Zinkoxid, möglicherweise mit Aluminium dotiert, mit einer Dicke im Bereich zwischen 1 und 18 nm,
(v) eine Schicht aus Zink-Zinn-Mischoxid mit einer Dicke im Bereich zwischen 14 und 30 nm,
(vi) eine Schicht aus Siliciumnitrid mit einer Dicke im Bereich zwischen 14 und 30 nm und
(vii) optional eine Schicht aus Titan-Zirkonium-Mischoxid mit einer Dicke im Bereich zwischen 2 und 10 nm.

11. Verglasung nach einem der Ansprüche 1 bis 9, wobei der Stapel dünner Schichten eine Schicht aus einem dielektrischen Material mit einem Brechungsindex, der höher als 2,2 ist, in wenigstens einer der beiden dielektrischen Beschichtungen umfasst.

**12.** Verglasung nach Anspruch 11, wobei das dielektrische Material mit einem Brechungsindex, der höher als 2,2 ist, ein Oxid wenigstens eines aus Ti, Nb und Zr ausgewählten Elements ist.

**13.** Verglasung nach einem der Ansprüche 11 und 12, wobei der Stapel dünner Schichten in der beim Substrat beginnenden Reihenfolge wenigstens Folgendes umfasst:

(i) eine Schicht aus Zink-Zinn-Mischoxid mit einer Dicke im Bereich zwischen 5 und 20 nm,
(ii) eine Schicht aus Titan-Zirkonium-Mischoxid mit einer Dicke im Bereich zwischen 5 und 25 nm,
(iii) eine Schicht aus Zinkoxid, möglicherweise dotiert, mit einer Dicke im Bereich zwischen 2 und 8 nm,
(iv) eine auf Silber beruhende funktionelle Schicht mit einer Dicke im Bereich zwischen 8 und 16 nm,
(v) eine Barriereschicht aus Zinkoxid, möglicherweise mit Aluminium dotiert, mit einer Dicke im Bereich zwischen 1 und 18 nm,
(vi) eine Schicht aus Zink-Zinn-Mischoxid mit einer Dicke im Bereich zwischen 14 und 30 nm,
(vii) eine Schicht aus Siliciumnitrid mit einer Dicke im Bereich zwischen 14 und 30 nm und
(viii) optional eine Schicht aus Titan-Zirkonium-Mischoxid mit einer Dicke im Bereich zwischen 2 und 10 nm.

**14.** Verglasung nach einem der vorhergehenden Ansprüche, die eine Variation der Farbe in der Transmission und der Reflexion zwischen der Verglasung, die nicht wärmebehandelt wurde, und der wärmebehandelten Verglasung aufweist, die durch ΔE* definiert ist und in einer einzelnen Verglasung höchstens 8 und vorzugsweise höchstens 5 beträgt.

**15.** Verglasung nach einem der vorhergehenden Ansprüche, die eine Variation in der Licht- und Energietransmission und den Reflexionswerten zwischen der Verglasung, die nicht wärmebehandelt wurde, und der wärmebehandelten Verglasung aufweist, die in einer einzelnen Verglasung höchstens 5 und vorzugsweise höchstens 3 beträgt.

**Revendications**

**1.** Vitrage comprenant un substrat transparent pourvu d'un empilement de couches minces comprenant, dans l'ordre à partir du substrat, un premier revêtement diélectrique, une couche fonctionnelle réfléchissant le rayonnement infrarouge, une couche barrière directement superposée sur la couche fonctionnelle et un second revêtement diélectrique et comprenant une seule couche fonctionnelle, **caractérisé en ce que** (i) le premier revêtement diélectrique comprend une couche formée à partir d'un oxyde, en contact direct avec le substrat, (ii) la couche barrière est à base d'oxyde de zinc ou est constituée d'un oxyde d'indium éventuellement dopé avec de l'étain et (iii) le second revêtement diélectrique comprend, dans l'ordre, une couche formée à partir d'un oxyde autre que l'oxyde de silicium ayant une épaisseur supérieure à 5 nm et une couche formée à partir d'un nitrure de silicium ou d'un oxyde de silicium ayant une épaisseur d'au moins 14 nm.

**2.** Vitrage selon la revendication 1, dans lequel la couche formée à partir d'un oxyde en contact direct avec le substrat est une couche d'oxyde mixte de zinc-étain.

**3.** Vitrage selon l'une des revendications 1 ou 2, dans lequel la couche formée à partir d'un oxyde en contact direct avec le substrat a une épaisseur d'au moins 5 nm.

**4.** Vitrage selon l'une quelconque des revendications précédentes, dans lequel directement en contact avec la couche fonctionnelle, le premier revêtement diélectrique comprend une couche à base d'oxyde de zinc.

**5.** Vitrage selon la revendication 4, dans lequel la couche à base d'oxyde de zinc a une épaisseur de 15 nm au maximum, de préférence dans la plage comprise entre 1,5 et 10 nm.

**6.** Vitrage selon l'une quelconque des revendications précédentes, dans lequel la couche barrière est constituée d'un oxyde de zinc éventuellement dopé avec de l'aluminium.

**7.** Vitrage selon l'une quelconque des revendications précédentes, dans lequel la couche barrière a une épaisseur de 20 nm au maximum, de préférence dans la plage comprise entre 1 et 18 nm.

**8.** Vitrage selon l'une quelconque des revendications précédentes, dans lequel le second revêtement diélectrique comprend une couche de finition protectrice formant la dernière couche de l'empilement qui est constituée d'un oxyde ou oxyde sous-stoechiométrique d'au moins un élément choisi entre Ti et Zr.

**9.** Vitrage selon la revendication 8, dans lequel la couche de finition protectrice a une épaisseur de 15 nm au maximum, de préférence dans la plage comprise entre 2 et 10 nm.

**10.** Vitrage selon l'une quelconque des revendications précédentes, dans lequel l'empilement de couches minces comprend, dans l'ordre à partir du substrat :

(i) une couche d'oxyde mixte de zinc-étain ayant une épaisseur dans la plage comprise entre 27 et 45 nm,
(ii) une couche d'oxyde de zinc, éventuellement dopé, ayant une épaisseur dans la plage comprise entre 2 et 8 nm,
(iii) une couche fonctionnelle à base d'argent ayant une épaisseur dans la plage comprise entre 8 et 16 nm,
(iv) une couche barrière d'oxyde de zinc, éventuellement dopé avec de l'aluminium, ayant une épaisseur dans la plage comprise entre 1 et 18 nm,
(v) une couche d'oxyde mixte de zinc-étain ayant une épaisseur dans la plage comprise entre 14 et 30 nm,
(vi) une couche de nitrure de silicium ayant une épaisseur dans la plage comprise entre 14 et 30 nm et
(vii) facultativement, une couche d'oxyde mixte de titane-zirconium ayant une épaisseur dans la plage comprise entre 2 et 10 nm.

**11.** Vitrage selon l'une quelconque des revendications 1 à 9, dans lequel l'empilement de couches minces comprend une couche d'un matériau diélectrique ayant un indice de réfraction supérieur à 2,2 dans au moins l'un des deux revêtements diélectriques.

**12.** Vitrage selon la revendication 11, dans lequel le matériau diélectrique ayant un indice de réfraction supérieur à 2,2 est un oxyde d'au moins un élément choisi entre Ti, Nb et Zr.

**13.** Vitrage selon l'une quelconque des revendications 11 et 12, dans lequel l'empilement de couches minces comprend, dans l'ordre à partir du substrat :

(i) une couche d'oxyde mixte de zinc-étain ayant une épaisseur dans la plage comprise entre 5 et 20 nm,
(ii) une couche d'oxyde mixte de titane-zirconium ayant une épaisseur dans la plage comprise entre 5 et 25 nm,
(iii) une couche d'oxyde de zinc, éventuellement dopé, ayant une épaisseur dans la plage comprise entre 2 et 8 nm,
(iv) une couche fonctionnelle à base d'argent ayant une épaisseur dans la plage comprise entre 8 et 16 nm,
(v) une couche barrière d'oxyde de zinc, éventuellement dopé avec de l'aluminium, ayant une épaisseur dans la plage comprise entre 1 et 18 nm,
(vi) une couche d'oxyde mixte de zinc-étain ayant une épaisseur dans la plage comprise entre 14 et 30 nm,
(vii) une couche de nitrure de silicium ayant une épaisseur dans la plage comprise entre 14 et 30 nm et
(viii) facultativement, une couche d'oxyde mixte de titane-zirconium ayant une épaisseur dans la plage comprise entre 2 et 10 nm.

**14.** Vitrage selon l'une quelconque des revendications précédentes présentant une variation de couleur en transmission et en réflexion entre le vitrage qui n'a pas été traité thermiquement et le vitrage traité thermiquement définie par un $\Delta E^*$ dans un seul vitrage de 8 au maximum, de préférence de 5 au maximum.

**15.** Vitrage selon l'une quelconque des revendications précédentes présentant une variation des valeurs de transmission et de réflexion de la lumière et de l'énergie entre le vitrage qui n'a pas été traité thermiquement et le vitrage traité thermiquement dans un seul vitrage de 5 au maximum, de préférence de 3 au maximum.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1140721 A

- WO 2007080428 A